Europäisches Patentamt

European Patent Office

Office européen des brevets

(11) Veröffentlichungsnummer : **0 134 829**
**B1**

# (12) EUROPÄISCHE PATENTSCHRIFT

(45) Veröffentlichungstag der Patentschrift :
19.08.87

(51) Int. Cl.⁴ : **F 16 D   3/50**, F 16 D  13/68

(21) Anmeldenummer : 83109086.5

(22) Anmeldetag : 14.09.83

(54) Drehelastische Kupplung mit Koppelglied.

(43) Veröffentlichungstag der Anmeldung :
27.03.85 Patentblatt 85/13

(45) Bekanntmachung des Hinweises auf die Patenterteilung : 19.08.87 Patentblatt 87/34

(84) Benannte Vertragsstaaten :
AT BE CH DE FR GB IT LI NL SE

(56) Entgegenhaltungen :
FR-A-   450 983
GB-A- 2 097 099
US-A- 4 300 363

(73) Patentinhaber : WOCO Franz-Josef Wolf & Co.
Sprudelallee 19
D-6483 Bad Soden-Salmünster (DE)

(72) Erfinder : Wolf, Franz-Josef
Sprudelallee 19
D-6483 Bad Soden-Salmünster (DE)
Erfinder : Pietsch, Hubert
Am Quellenrain 13
D-6483 Bad Soden-Salmünster (DE)

(74) Vertreter : Jaeger, Klaus, Dipl.-Chem. Dr. et al
JAEGER & PARTNER Patentanwälte Pippinplatz 4a
D-8035 Gauting (DE)

## Beschreibung

Die Erfindung betrifft eine drehelastische Kupplung, bei der zwei gegeneinander verdrehbare Kupplungshälften über mindestens ein federndes Zwischenglied und, unter Bezug auf den Kraftleitungsweg durch die Kupplung, in Serie zu diesem federnden Zwischenglied über mindestens ein eine Rotation in eine Translation oder umgekehrt, eine Translation in eine Rotation umsetzendes bewegungsumsetzendes Zwischenglied kraftleitend miteinander verbunden sind, und mit mindestens einem Auflagerblech, das radial außen auf mindestens einem radial innen kraftschlüssig abgestützten mit einer ersten der beiden Kupplungshälften verbundenen federnden Zwischenglied aufliegt und an dem das bewegungsumsetzende Zwischenglied direkt oder über mindestens ein Koppelglied translatorisch in der Weise angelenkt ist, daß das Auflagerblech bei einer auf die erste Kupplungshälfte bezogenen Relativverdrehung der anderen Kupplungshälfte, die rotatorisch fest mit dem bewegungsumsetzenden Zwischenglied verbunden ist, zumindest im wesentlichen radial, das federnde Zwischenglied spannend oder entspannend, beaufschlagt wird, wobei zumindest auf einer Seite der Koppelglieder ein Seitenblech, das beispielsweise Teil eines Käfigs, einer Kapselschale, eines Zentrierblechs oder eines Belagträgerblechs sein kann, vorgesehen ist, das drehfest mit der Kupplungshälfte verbunden ist, an der auch das oder die federnden Zwischenglieder drehfest gehalten sind.

Eine drehelastische Kupplung dieser Art zählt zum nicht vorveröffentlichten Stand der Technik (EP-A-112 960 veröffentlicht am 11.07.84 : EP-A-110 065), veröffentlicht am 13.06.84. Zur Vermeidung von Wiederholungen wird der vorstehend genannte nicht vorveröffentlichte Stand der Technik ausdrücklich auch zum Bestandteil der ursprünglichen Offenbarung der vorliegenden Anmeldung erklärt.

Die Kupplung nach dem Stand der Technik ermöglicht die Nutzung eines Verdrehwinkels der beiden Kupplungshälften relativ zueinander bis zu einem Betrag von 180° und erlaubt, den Wirkungsweg dergestalt auszulegen, daß die federnden Zwischenglieder unter Kompression beansprucht werden. Gegenüber einer Zugbeanspruchung wird die Standzeit der Kupplung, insbesondere bei Wechselbelastung, durch eine Kompressionsbeanspruchung der federnden Zwischenglieder signifikant verlängert. Dies trifft insbesondere dann zu, wenn die federnden Zwischenglieder Gummifedern, speziell Gummi-Metall-Federpakte sind. Dabei dienen bei der Kupplung nach dem Stand der Technik die Koppelglieder dem Zweck, die verbleibende rotatorische Komponente am translationsseitigen Ausgang des bewegungsumsetzenden Zwischengliedes auszuschalten und ebenfalls in eine Translationskomponente umzusetzen. Selbst bei Verwendung relativ langer Koppelglieder kann diese translationsseitig verbleibende rotatorische Restkomponente jedoch nicht vollständig ausgeschlossen werden, so daß stets eine restliche Scherkomponente verbleibt, mit der das federnde Zwischenglied beaufschlagt wird. Die praktischen Erfahrungen mit der Kupplung nach dem Stand der Technik haben inzwischen überraschenderweise gezeigt, daß selbst durch solche minimalen Restkomponenten der Scherkraftbeanspruchung der federnden Zwischenglieder eine Verminderung der Standzeit der federnden Zwischenglieder und damit der wartungsfreien Standzeit der Kupplung vermindert wird.

Wenn weiterhin bei der drehelastischen Kupplung nach dem Stand der Technik beispielsweise aus Sicherheitsgründen ein Durchrutschen der Kupplung am bewegungsumsetzenden Zwischenglied bei Überlastung ausgeschossen werden soll, sind Anschlagmittel vorgesehen, die entweder den radialen Federweg der federnden Zwischenglieder durch Anschlagkanten oder die Relativverdrehung der beiden Kupplungshälften gegeneinander durch Klauenanschlag begrenzen. Solche Anschlagmittel sind jedoch zusätzliche Konstruktionselemente, die die Masse der Kupplung in durchaus unerwünschter Weise vergrößern.

Der Anmeldung liegt die Aufgabe zugrunde, eine Kupplung der eingangs beschriebenen Art dahingehend zu verbessern, daß einerseits auch die verbleibenden restlichen Scherlastkomponenten bei der Beaufschlagung der federnden Zwischenglieder vollkommen ausgeschaltet werden können und andererseits ein Durchrutschen der Kupplung mit Mitteln zu verhindern, die die Masser der Kupplung nicht vergrößern.

Bei einer Kupplung der eingangs beschriebenen Art wird diese Aufgabe gemäß der Erfindung dadurch gelöst, daß ein radial ausgerichtetes Langloch im Seitenblech vorgesehen ist, durch das der Lagerzapfen oder Lagerbolzen hindurchgreift, mit dem das Koppelglied am federnden Zwischenglied angelenkt ist.

Durch eine solche Führung des Koppelgliedes an seinem Anlenkpunkt am federnden Zwischenglied kann eine 100 %ig symmetrische Verteilung der über das Koppelglied in das federnde Zwischenglied eingeleiteten Arbeit erzielt, also jegliche Scherlast am federnden Zwischenglied ausgeschaltet werden.

Zu den Vorteilen der drehelastischen Kupplung der eingangs genannten Art zählt ein Überlastungsschutz, der insbesondere bei dem vorzugsweise als bewegungsumsetzendes Zwischenglied verwendeten Exzenter durch ein « Durchrutschen » der Kupplung nach einem Verdrehwinkel von 180° gegeben ist. Wenn dieses Merkmal der Kupplung beibehalten werden soll, ist das Langloch, in dem der Lagerzapfen oder der Lagerbolzen des Koppelgliedes geführt ist, so bemessen, daß seine Länge zumindest gleich, vorzugsweise etwas größer als die Länge des Weges ist, den der Lagerzapfen oder Lagerbolzen in dem Langloch bei einer Relativverdrehung der beiden Kupplungshälften gegeneinander aus der Nullage heraus bis zu dem größten Drehwinkel entspricht, den das bewegungsumsetzende Zwischenglied ermöglicht. Bei der vorzugsweise eingestzten Exzenterscheibe als bewegungsumsetzenden Zwischenglied ist die Länge des Langlochs also vorzugsweise zumindest so lang bemessen, wie der Weg ist, den der Lagerzapfen oder Lagerbolzen des Koppelgliedes im Langloch bei einer Relativverdrehung der beiden Kupplungshälften gegeneinander von 0° bis 180° zurücklegt.

Wenn dagegen insbesondere aus Sicherheitsgründen, beispielsweise bei Aufzügen oder um im Bereich des Kraftfahrzeugbaus in jedem Fall einen Ausfall der Kupplung zu verhindern, eine Anschlagbegrenzung des Verdrehwinkels erwünscht ist, ist vorzugsweise das eine Ende des Langlochs so angeordnet, daß das Langloch den Lagerzapfen oder Lagerbolzen des Koppelgliedes in der Nullstellung der Kupplung, also bei einem Verdrehwinkel der beiden Kupplungshälften gegeneinander von 0°, gerade anschlagfrei oder mit praktisch vernachlässigbar geringem Anschlag aufnehmen kann, während das gegenüberliegende Ende des Langlochs, das je nach Ausgestaltung der Kupplung sowohl radial innen als auch radial außen liegen kann, so liegt, daß der Lagerzapfen oder Lagerbolzen an diesem Langlochende anschlägt, bevor der Verdrehwinkel der Kupplung 180° beträgt und dadurch den nutzbaren und verfügbaren Verdrehwinkel der Kupplung begrenzt. Der verfügbare Verdrehwinkel entspricht also der Länge des Langlochs. Nach Anschlag des Lagerzapfens oder Lagerbolzens an diesem Langlochende, das den Verdrehwinkel der Kupplung begrenzt, erfolgt die Arbeitsübertragung durch die Kupplung hindurch nicht mehr drehelastisch, sondern formschlüssig, zumindest bei einer Beaufschlagung der Kupplung in Richtung größerer Verdrehwinkel.

Nach einer speziellen Ausgestaltung der Erfindung ist das bewegungsumsetzende Zwischenglied vorzugsweise ein Exzenter und das Koppelglied vorzugsweise ein Pleuel, dessen eines Auge, in der Regel das größere Auge, den Exzenter außen umgreifend auf diesem drehbar gelagert ist und dessen gegenüberliegendes, in der Regel kleineres Auge den Drehzapfen haltert, an dem Drehzapfen gelagert ist oder an dem Lagerbolzen angelenkt oder gelagert ist, der das Langloch mit Spiel durchsetzt.

Die Koppelglieder brauchen jedoch keineswegs nur starre Pleuel oder Schubstangen zu sein, sondern können ohne weiteres auch zugfeste oder begrenzt zugelastische biegbare Zugglieder sein. In jedem Fall werden das bewegungsumsetzende Zwischenglied und das Koppelglied vorzugsweise jedoch so miteinander verbunden, daß das federnde Zwischenglied bei einer Relativverdrehung der beiden Kupplungshäften gegenüber der jeweils anderen Kupplungshälfte aus der Nullage heraus mit einer Kompressionskraft beaufschlagt wird. Bei einer besonders bevorzugten Ausgestaltung der Erfindung wird dies insbesondere durch mindestens ein Auflagerblech erreicht, das radial außen auf mindestens einem radial innen kraftschlüssig abgestützen und mit einer der beiden Kupplungshälften fest verbundenen federnden Zwischenglied aufliegt und an dem das bewegungsumsetzende Zwischenglied über das Koppelglied translatorisch in der Weise angelenkt ist, daß das Auflagerblech bei einer Relativverdrehung der anderen Kupplungshälfte, die rotatorisch fest mit dem bewegungsumsetzenden Zwischenglied verbunden ist, das federnde Zwischenglied spannend oder entspannend, beaufschlagt. Bei einer Relativverdrehung aus der Nullage heraus, und zwar in beide Drehrichtungen, erfolgt nach dieser Ausgestaltung der Kupplung eine Kompressionsbeaufschlagung des federnden Zwischengliedes, während das federnde Zwischenglied bei einer Relativverdrehung in Richtung auf die Nullage hin entspannt wird.

Die Kupplung gemäß der Erfindung wird vorzugsweise im Kraftfahrzeugbau verwendet, und zwar vor allem im Antriebsstrang, insbesondere zwischen der Mitnehmerscheibe und der Abtriebwelle einer Trennkupplung. Die Kupplung der Erfindung kann weiterhin vorteilhaft als Tilger, insbesondere Niederfrequenztilger, eingesetzt werden. Sie ist aber aufgrund ihrer hohen Anpassungsfähigkeit darüber hinaus selbstverständlich für praktisch jede Aufgabe einsetzbar, bei der eine drehelastische Übertragung von Drehmomenten von einer ersten auf eine zweite Welle gefordert wird.

Die Erfindung ist im folgenden anhand eines Ausführungsbeispiels in Verbindung mit der Zeichnung näher erläutert. Es zeigen

Figur 1 in Seitensicht auf die Radialebene, teilweise im Schnitt, ein Ausführungsbeispiel der Kupplung mit Auflagerblech ; und

Figur 2 einen Schnitt nach II-II in Fig. 1.

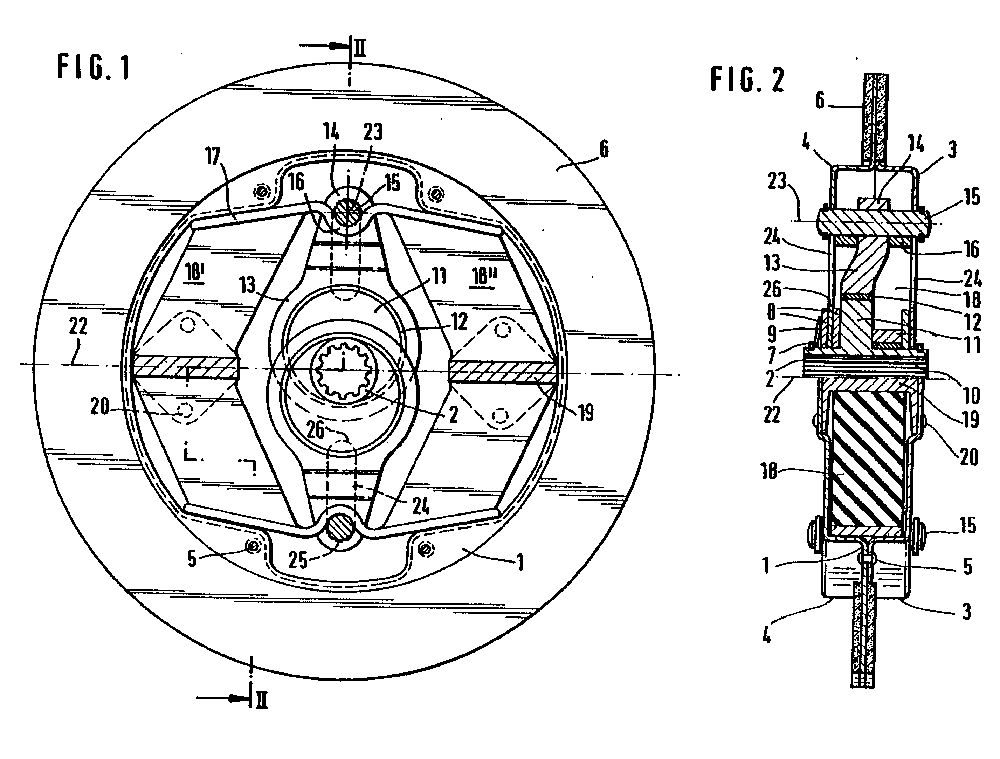

Die in den Fig. 1 und 2 als Ausführungsbeispiel der Erfindung gezeigte drehelastische Kupplung ist als Teil einer Trennkupplung ausgelegt. Die in den Figuren dargestellte Kupplung besteht aus einer ersten Kupplungshälfte 1 und einer zweiten Kupplungshälfte 2, die über Zwischenglieder drehelastisch kraftleitend miteinander verbunden ist. Die beiden Kupplungshälften 1, 2 sind koaxial und zumindest im wesentlichen auch koplanar zueinander angeordnet, und zwar in der Weise, daß die zweite Kupplungshälfte radial innenliegend von der ersten Kupplungshälfte radial außenliegend umschlossen wird.

Die erste Kupplungshälfte 1 weist ein auf einer Seite angeordnetes Zentrier- und Abdeckblech 3 und auf der axial gegenüberliegenden Seite ein ebenfalls zentrierendes und abdeckendes Belagträgerblech 4 auf, die peripher durch Nieten 5 fest miteinander verbunden sind. Das Belagträgerblech 4 trägt an seinem Außenrand in üblicher Weise Reibbelagscheiben 6.

Das Zentrierblech 3 und das Belagträgerblech 4 sind beide drehbar auf der als Nabe der Kupplung ausgebildeten inneren Kupplungshälfte 2 axial fixiert. Diese Fixierung erfolgt auf jeder Seite durch einen Sprengring 7, der in eine in der Nabe der Kupplungshälfte 2 ausgebildete Ringnut eingreift. Eine schwimmende Beilagscheibe 8 und eine Reibscheibe 9 vervollständigen die axiale Fixierung des Belagträgerblechs 4. In der in der Fig. 2 nicht dargestellten Weise kann selbstverständlich auch das Zentrierblech 3 in gleicher Weise fixiert sein.

Die als Nabe ausgebildete zweite Kupplungshälfte 2 ist in üblicher Weise mit einer Innenverzahnung 10 versehen, mit der sie auf einer zugeordneten Welle drehfest fixierbar ist.

In dem hier beschriebenen Ausführungsbeispiel der drehelastischen Kupplung erfolgt die drehelastische Verbindung der beiden Kupplungshälften 1,2 miteinander über zwei zueinander parallele Kraftleitungswege, die symmetrisch zueinander ausgebildet sind. Aus Gründen der übersichtlicheren Darstellung ist daher im folgenden nur einer der beiden Kraftleitungswege im einzelnen erläutert.

Drehfest mit der zweiten Kupplungshälfte, im vorliegenden Fall einstückig mit dieser, ist eine Exzenterschiebe 11 angeordnet, auf der über ein Rollkörperlager 12 das untere Pleuelauge eines als Koppelglied dienenden Pleuels 13 gelagert ist. Der Pleuelkopf 14 ist mit seinem gegenüberliegenden Pleuelauge über einen Pleuel lager bolzen 15 mittig in einem Auflager 16 eines Auflagerblechs 17 angelenkt. Das Auflagerblech liegt anvulkanisiert auf zwei zueinander symmetrischen Elastomerfederpaketen 18', 18" auf, die gemeinsam als Teile einer zusammenwirkenden Gummifeder das federnde Zwischenglied 18 der drehelastischen Kupplung bilden. Dieses als Elastomerfeder ausgebildete federnde Zwischenglied 18 ist auf einem Steg 19 abgestützt, der über Nieten 20 fest mit dem Zentrierblech 3 und dem Belagträgerblech 4, also fest mit der ersten Kupplungshälfte 1, verbunden ist. Die Elastomerfeder ist unter Kompressionsvorspannung zwischen dem Auflagerblech 17 und dem Steg 19 eingespannt, wobei das Auflagerblech 17 an Anschlägen der ersten Kupplungshälfte 1 anliegt.

Sowohl im Belagträgerblech 4 als auch im Zentrierblech 3 ist jeweils ein Langloch 24 ausgeschnitten, das vom Pleuellagerbolzen 15, der länger als der Abstand des Zentrierblechs 3 vom Belagträgerblech 4 ist, mit Spiel durchsetzt wird. Die axiale Fixierung des Pleuellagerbolzens 15 erfolgt in dem hier gezeigten Ausführungsbeispiel durch außen aufgesteckte Sprengringe.

Das Langloch 24 ist genau radial ausgerichtet und dient als Schlitzführung für den Pleuellagerbolzen 15. Dabei ist das radial außenliegende eine Ende 25 des Langlochs 24 so gelegt, daß es auf der radialen Mittellinie der Kupplung symmetrisch zwischen den beiden Elastomerteilfederpaketen 18', 18" liegt und bei Anschlag des Auflagerblechs 17 an der ersten Kupplungshälfte 1 den Pleuellagerbolzen 15 gerade anschlagfrei aufnehmen kann. Das gegenüberliegende, also radial innenliegende Ende 26 des Langlochs 24 liegt radial gerade etwas weiter innen als dem radial am weitesten innenliegenden Punkt entspricht, den der Pleuellagerbolzen 15 bei einem Verdrehwinkel der beiden Kupplungshälften gegeneinander von 180° einnehmen kann. Wenn der maximal mögliche Verdrehwinkel der Kupplung beispielsweise aus Sicherheitsgründen auf einen kleineren Wert durch Formschluß begrenzt werden soll, wird das radial innenliegende Ende 26 des Langlochs 24 um einen entsprechenden Betrag weiter nach radial außen verlegt, wird also die Länge des Langlochs 24 verkürzt.

Bei einer Relativverdrehung der ersten Kupplungshälfte 1 gegenüber der zweiten Kupplungshälfte 2 wird der Exzenter 11 aus der in den Figuren 1 und 2 gezeigten Nullage herausgedreht, und zwar je nach Drehrichtung der zweiten Kupplungshälfte 2 nach rechts oder nach links. In beiden Fällen führt dies zu einer Verkürzung des radialen Abstandes zwischen der Mittellinie 22 der zweiten Kupplungshälfte und der Mittellinie 23 des Pleuellagerbolzens 15. Diese Verschiebung des Pleuellagerbolzens 15 nach radial innen erfolgt dabei ohne jede Tangentialkomponente, da der Pleuellagerbolzen 15 im Langloch 24 exakt radial geführt ist. Durch diese Verschiebung des Pleuellagerbolzens 15 nach radial innen wird weiterhin in der Darstellung der Figuren 1 und 2 das Auflagerblech 17 abwärts gegen die Rückstellkraft der vorgespannten Elastomerfeder 18 gezwungen, die unter speichernder Aufnahme der eingeleiteten Arbeit weiter komprimiert wird. Dieses Einleiten der Kompressionsarbeit in das federnde Zwischenglied 18 erfolgt dabei durch die Führung des Pleuellargerbolzens 15 im Langloch 14 in beiden Elastomerteilfedern 18', 18" mit absolut symmetrischer Verteilung, also ohne jede Scherkraft. Dies wiederum hat nicht nur längere Lebensdauer der Elastomerfeder, sondern vor allem auch ein Ausschalten jeglicher Unwucht der Kupplung, insbesondere bei hohen Drehzahlen zur Folge. Bei einer Beaufschlagung der eingangsseitigen Kupplungshälfte mit einem Drehmoment wird die auf diese Weise in die Elastomerfeder eingeleitete Verformungsarbeit von der Elastomerfeder so lange speichernd aufgenommen, bis sich die an den beiden Kupplungshälften wirksamen Drehmomente im Gleichgewicht befinden. Mit anderen Worten, bis zum Eintritt des dynamischen Momentengleichgewichts zwischen Eingangshälfte und Ausgangshälfte der Kupplung wird das an der Ausgangshälfte der Kupplung auftretende Trägheitsmoment durch Umsetzen der in die Eingangshälfte der Kupplung eingeleiteten Arbeit in eine elastische Verformungsarbeit der Elastomerfeder 18 gespeichert. Dabei ist es in erkennbarer Weise gleichgültig, ob die äußere Kupplungshälfte 1 oder die innere Kupplungshälfte 2 die Eingangshälfte oder die Ausgangshälfte der Kupplung ist. Die Funktion der Kupplung ist in beiden Fällen identisch. In beiden Fällen wird der Pleuellagerbolzen 15 durch das Langloch 24 strikt radial geführt. In beiden Fällen ist lediglich der relative Verdrehwinkel der beiden Kupplungshälften 1, 2 gegeneinander ausschlaggebend, also unabhängig von der Drehrichtung und unabhängig vom Kraftfluß.

Statt in der in den Figuren 1 und 2 gezeigten Weise an ein Auflagerblech 17 angelenkt zu sein, kann der Lagerbolzen 15 des Koppelgliedes 13 auch direkt an ein radial außenliegendes Federpaket, beispielsweise ein Elastomerfederpaket, drehbar angelenkt sein. Bei dieser Ausbildung der Kupplung ist der Exzenter 11 gegenüber der in Fig. 1 gezeigten Nullstellung um 180° in seiner Nullstellung verdreht, so daß also bei einer Auslenkung des Exzenters mit der um 180° verdrehten Nullstellung eine Verschiebung des Lagerbolzens 15 nach radial außen erfolgt, wodurch ebenfalls eine Kompression des in der beschriebenen Weise radial außen angeordneten federnden Zwischengliedes erfolgt. Auch bei dieser Ausbildung der Kupplung kann der Pleuellagerbolzen 15 gemäß der Erfindung in Langlochschlitzen 24 geführt sein. Im Unterschied zu der in Fig. 1 gezeigten Ausbildung der Kupplung liegt der Lagerbolzen 15 dann in der Nullstellung der Kupplung jedoch radial innen und wird bei Beaufschlagung der Kupplung und bei Einstellung eines Verdrehwinkels nach radial außen geführt.

**Patentansprüche**

1. Drehelastische Kupplung, bei der zwei gegeneinander verdrehbare Kupplungshälften (1, 2) über mindestens ein federndes Zwischenglied (18) und, unter Bezug auf den Kraftleitungsweg durch die Kupplung, in Serie zu diesem federnden Zwischenglied über mindestens ein eine Rotation in eine Translation oder umgekehrt, eine Translation in eine Rotation umsetzendes bewegungsumsetzendes Zwischenglied (11) kraftleitend miteinander verbunden sind, und mit mindestens einem Auflagerblech (17), das radial außen auf mindestens einem radial innen kraftschlüssig abgestützten mit einer ersten der beiden Kupplungshälften (1) verbundenen federnden Zwischenglied (18) aufliegt und an dem das bewegungsumsetzende Zwischenglied (11) direkt oder über mindestens ein Koppelglied (13) translatorisch in der Weise angelenkt ist, daß das Auflagerblech (17) bei einer auf die erste Kupplungshälfte bezogenen Relativverdrehung der anderen Kupplungshälfte, die rotatorisch fest mit dem bewegungsumsetzenden Zwischenglied (11) verbunden ist, zumindest im wesentlichen radial, das federnde Zwischenglied (18) spannend oder entspannend, beaufschlagt wird, wobei zumindest auf einer Seite der Koppelglieder ein Seitenblech (3, 4) vorgesehen ist, das drehfest mit der Kupplungshälfte (1) verbunden ist, an der auch das oder die federnden Zwischenglieder (18) drehfest gehalten sind, gekennzeichnet durch ein radial ausgerichtetes Langloch (24) im Seitenblech (3, 4), durch das der Lagerzapfen oder Lagerbolzen (15) hindurchgreift, mit dem das Koppelglied (13) am federnden Zwischenglied (18) angelenkt ist.

2. Kupplung nach Anspruch 1 dadurch gekennzeichnet, daß die Länge des Langlochs (24) zumindest gleich der Länge des Weges ist, den der Lagerzapfen oder Lagerbolzen (15) in dem Langloch (24) bei einer Relativverdrehung der beiden Kupplungshälften gegeneinander von 0° bis 180° zurücklegt.

3. Kupplung nach Anspruch 1, dadurch gekennzeichnet, daß das eine Ende (25) des Langlochs (24) so angeordnet ist, daß das Langloch den Lagerzapfen oder Lagerbolzen (15) in der Nullstellung der Kupplung, also bei einem Verdrehwinkel der beiden Kupplungshälften gegeneinander von 0°, gerade anschlagfrei oder mit vernachlässigbar geringem Anschlag aufnehmen kann, während das gegenüberliegende Ende (26) des Langlochs (24) so liegt, daß der Lagerzapfen oder Lagerbolzen (15) anschlägt, bevor der Verdrehwinkel der Kupplung 180° beträgt.

4. Kupplung nach einem der Ansprüche 1 bis 3, dadurch gekennzeichnet, daß das bewegungsumsetzende Zwischenglied ein Exzenter (11) ist.

5. Kupplung nach einem der Ansprüche 1 bis 4, dadurch gekennzeichnet, daß das Koppelglied ein Pleuel (13) ist.

6. Drehelastische Kupplung nach einem der Ansprüche 1 bis 5, gekennzeichnet durch mindestens ein Auflagerblech (17), das radial außen auf mindestens einem radial innen kraftschlüssig abgestützten mit einer der beiden Kupplungshälften (1) verbundenen federnden Zwischenglied (18) aufliegt und an dem das bewegungsumsetzende Zwischenglied (11) über das Koppelglied (13) translatorisch in der Weise angelenkt ist, daß das Auflagerblech (17) bei einer Relativverdrehung der anderen Kupplungshälfte (2), die rotatorisch fest mit dem bewegungsumsetzenden Zwischenglied (11) verbunden ist, das federnde Zwischenglied (18) spannend oder entspannend, beaufschlagt.

7. Drehelastische Kupplung nach einem der Ansprüche 1 bis 6, dadurch gekennzeichnet, daß die Koppelglieder (13) zugfeste oder begrenzt zugelastische biegbare Zugglieder sind.

8. Kupplung nach einem der Ansprüche 1 bis 7, dadurch gekennzeichnet, daß das bewegungsumsetzende Zwischenglied (11) und das Koppelglied (13) so miteinander verbunden sind, daß das federnde Zwischenglied (18) bei einer Relativverdrehung der beiden Kupplungshälften (1, 2) gegeneinander mit einer Kompressionskraft beaufschlagt wird.

9. Verwendung der Kupplung nach einem der Ansprüche 1 bis 8 im Kraftfahrzeugbau, und zwar im Antriebssystem, insbesondere zwischen der Mitnehmerscheibe und der Abtriebswelle einer Trennkupplung, und als Tilger, insbesondere Niederfrequenztilger.

**Claims**

1. A rotationally elastic coupling, in which two mutually rotatable half-couplings (1, 2) are connected with one another so as to transmit force by means of at least one resiliant intermediate link (18) and, in series with this resiliant intermediate link in terms of the force transmission path through the coupling, by means of at least one movement-converting intermediate link (11) converting a rotation into a translational movement or, vice versa, a translational movement into a rotation, with at least one sheet metal support (17) which is in contact at a radially outward position with at least one resiliant intermediate link (18) which is connected in frictional support at a radially inward position to a first of the two half-couplings (1) and to which the movement-converting intermediate link (11) is linked in a translatory way directly or by at least one coupling link (13) in such a way that the sheet metal support (17) in the event of a relative rotation, relative to the first half-coupling, of the other half-coupling which is rotationally solidly connected with a movement-converting intermediate link (11), is subjected to an at least substantially radial force which strains or relieves the resiliant intermediate link (18), with a lateral sheet metal (3,4) provided at at least one side of the coupling length which is connected rotationally solidly with the first half-coupling (1) with which the resiliant intermediate link (18) is, or the resiliant intermediate links (18) are, connected rotationally solidly, too, wherein a radially extending longhole (24) in the lateral sheet metal (3, 4) is provided into which a bearing neck or bearing bolt (15) is protruding by which the coupling link (13) is linked to the resiliant intermediate link (18).

2. A coupling according to claim 1, wherein the length of the longhole (24) has at least the length of the way of the bearing neck or bearing bolt (15) within the longhole (24) when the two half-couplings are rotated relative to each other from 0 to 180°.

3. A coupling according to claim 1, wherein a first front end (25) of the longhole (24) is positioned in such a way that, in a neutral position of the coupling, which means that the rotational angle between the two half-couplings is 0°, the longhole can take up the bearing neck or bearing bolt (15) without having the effect of end stop means, while the opposite front end (26) of the longhole (24) is positioned in such a way that it has the effect of end stop means before the rotational angle of the coupling reaches 180°.

4. A coupling according to one of the claims 1 to 3, wherein the movement-converting intermediate link is an excentric link (11).

5. A coupling according to one of the claims 1 to 4, wherein the coupling link is a crank link (13).

6. A rotationally elastic coupling according to one of the claims 1 to 5, wherein at least one sheet metal support (17) is provided which is in contact at a radially outward position with at least one resiliant intermediate link (18) which is connected in frictional support at a radially inward position to the first half-coupling (1) and to which the movement-converting intermediate link (11) is linked in a translatery way by the coupling link (13) in such a way that the sheet metal support (17) in the event of a rotation, relative to the first half-coupling (1), of the second half-coupling (2), which is rotationally solidly connected with a movement-converting intermediate link (11), is subjected to a force which strains or relieves a resiliant intermediate link (18).

7. A rotationally elastic coupling according to one of the claims 1 to 6, wherein the coupling links (13) are bendable tension links which are solid in tension or elastic in tension with limitation.

8. A coupling according to one of the claims 1 to 7, wherein the movement-converting intermediate link (11) and the coupling link (13) are connected to one another in such a way that, when the two half-couplings (1, 2) are rotated relative to one another, the resiliant intermediate link (18) is subjected to a compressive force.

9. Use of the coupling according to one of the claims 1 to 8 in motor vehicle construction, namely in the propulsion system, particularly between the clutch plate and the output shaft of a clutch and as a suppressor, particularly a low frequency suppressor.

**Revendications**

1. Accouplement élastique à rotation dans lequel deux moitiés d'accouplement (1, 2), qui peuvent tourner l'une par rapport à l'autre, sont reliées mécaniquement l'une à l'autre, de manière à transmettre les efforts, par au moins un organe intermédiaire élastique (18), et, en ce qui concerne le trajet de transmission des efforts par l'accouplement, en série avec cet organe intermédiaire élastique par l'intermédiaire d'au moins un organe intermédiaire (11) transformateur de mouvement, qui transforme une rotation en une translation, et, inversement, une translation en une rotation, et qui comporte au moins une tôle d'appui (17) qui s'applique, extérieurement dans le sens radial, sur au moins un organe intermédiaire élastique (18), qui prend mécaniquement appui intérieurement dans le sens radial et est relié à l'une des deux moitiés d'accouplement (1) et sur laquelle l'organe intermédiaire (11) transformateur de mouvement s'articule directement ou par l'intermédiaire d'au moins un organe d'accouplement (13), pour des mouvements de translation, de telle manière que, pour un mouvement de rotation de la deuxième moitié d'accouplement par rapport à la première moitié d'accouplement, solidement reliée, pour la rotation, à l'organe intermédiaire (11) transformateur de mouvement, de tôle d'appui (17) est soumise à une action au moins essentiellement dans le sens radial, en tendant ou en détendant l'organe intermédiaire élastique (18), l'un au moins des côtés des organes d'accouplement comportant une tôle latérale (3, 4) qui est reliée, sans rotation possible, à la moitié d'accouplement (1) sur laquelle le ou les organes intermédiaires élastiques (18) sont maintenus sans rotation relative possible, caractérisé en ce que la tôle latérale (3, 4) comporte un trou oblong (24), orienté dans le sens radial, dans lequel s'engage le tenon ou boulon de palier (15) par lequel l'organe d'accouplement (13) s'articule sur l'organe intermédiaire élastique (18).

2. Accouplement selon la revendication 1, caractérisé en ce que la longueur du trou oblong (24) est au moins égale à la longueur du trajet que le tenon ou le boulon (15) de palier parcourt dans le trou oblong (24) lorsque les deux moitiés d'accouplement tournent de 0° à 180° l'une par rapport à l'autre.

3. Accouplement selon la revendication 1, caractérisé en ce que l'une des extrémités (25) du trou oblong (24) est disposée de telle manière que le trou oblong peut, dans la position zéro de l'accouplement, c'est-à-dire pour un angle de rotation de 0° entre les deux moitiés d'accouplement, recevoir le tenon ou le boulon de palier de l'organe d'accouplement sans butée, ou avec une faible butée pratiquement négligeable, tandis que l'extrémité opposée (26) du tube oblong (24) est disposée de telle manière que le tenon ou goujon (15) de palier vient buter contre cette extrémité du trou oblong avant que l'angle de rotation relative des parties de l'accouplement n'atteigne 180°.

4. Accouplement selon l'une des revendications 1 à 3, caractérisé en ce que l'organe intermédiaire transformateur de mouvement est un excentrique (11).

5. Accouplement selon l'une des revendications 1 à 4, caractérisé en ce que l'organe d'accouplement est une bielle (13).

6. Accouplement élastique à rotation selon l'une des revendications 1 à 5, caractérisé en ce qu'il comporte au moins une tôle d'appui (17) qui s'applique, à l'extérieur dans le sens radial, sur au moins un organe intermédiaire élastique (18) qui prend mécaniquement appui à l'intérieur dans le sens radial et est relié solidement aux deux moitiés d'accouplement (1) et s'articule sur l'organe intermédiaire (11), transformateur de mouvement, par l'intermédiaire de l'organe d'accouplement (13), pour un mouvement de translation, de telle manière qu'au cours d'une rotation relative de l'autre moitié d'accouplement (2), reliée solidement, pour la rotation, à l'organe intermédiaire (11) transformateur de mouvement, la tôle d'appui (17) agit de manière à tendre ou à détendre l'organe intermédiaire élastique (18).

7. Accouplement élastique à rotation selon l'une des revendications 1 à 6, caractérisé en ce que les organes d'accouplement (13) sont des organes de traction résistant à la traction ou élastiques à la traction et souples.

8. Accouplement selon l'une des revendications 1 à 7, caractérisé en ce que l'organe intermédiaire (11) transformateur de mouvement et l'organe d'accouplement (13) sont reliés l'un à l'autre de telle manière qu'au cours d'une rotation relative des deux moitiés d'accouplement (1, 2), l'organe intermédiaire élastique (18) est soumis à une force de compression.

9. Utilisation de l'accouplement selon l'une des revendications 1 à 8 en construction automobile, surtout dans le système de commande, en particulier entre le disque d'entraînement et l'arbre de commande d'un accouplement dissociable, et comme amortisseur, notamment comme amortisseur de basse fréquence.

FIG.1

FIG.2

0 134 829